# EUROPÄISCHE PATENTSCHRIFT

(11) **EP 3 729 953 B1**
(45) Veröffentlichungstag und Bekanntmachung des Hinweises auf die Patenterteilung: **22.12.2021**
(21) Anmeldenummer: 20000118.8
(22) Anmeldetag: 19.03.2020
(51) Int. Cl.: A01F 15/10, A01D 90/06

(54) **SCHNEIDVORRICHTUNG**
CUTTING DEVICE
DISPOSITIF DE COUPE

(30) Priorität: 21.03.2019 DE 102019002029
(43) Veröffentlichungstag der Anmeldung: 28.10.2020
(73) Patentinhaber: Maschinenfabrik Bernard Krone GmbH & Co. KG, 48480 Spelle (DE)
(72) Erfinder: Trentmann, Justus, 49219 Glandorf (DE); Kalverkamp, Felix, 45665 Recklinghausen (DE)

(56) Entgegenhaltungen:
- DE-U1-202014 006 083
- US-B1- 6 912 835

## Beschreibung

Die Erfindung betrifft eine Schneidvorrichtung zum Fördern und Schneiden insbesondere landwirtschaftlichen Schneidgutes. Die Schneidvorrichtung hat einen Förderkanal und zumindest ein schwenkbar gelagertes Schneidelement. Das Schneidelement ist durch eine Bewegung in eine erste Schwenkrichtung aus einer Ruhestellung in eine Schneidstellung überführbar. In der Schneidstellung ist das Schneidelement zum Schneiden des Schneidgutes zumindest teilweise innerhalb des Förderkanals positioniert. Die Schneidvorrichtung hat eine Stellvorrichtung, die ein zumindest in der Schneidstellung des Schneidelementes im Betrieb am Schneidelement anliegendes und insbesondere schwenkbar um eine Stellschwenkachse gelagertes Stellelement umfasst. Die Schneidvorrichtung hat eine in unterschiedliche Schaltstellungen überführbare, drehbar um eine Schaltwellenachse gelagerte Schaltwelle. Mit der Schaltwelle ist das Stellelement in zumindest einer der Schaltstellungen der Schaltwelle gekoppelt. Die Schneidvorrichtung hat ein Rückstellelement zum Rückführen des Schneidelementes in die Schneidstellung und zum Halten des Schneidelementes in der Schneidstellung.

Aus der DE 20 2014 006 083 U1 ist eine landwirtschaftliche Erntemaschine bekannt mit einer vorbeschriebenen Schneidvorrichtung. Durch die Möglichkeit der Überführung des Schneidelementes von der Ruhestellung in die Schneidstellung lässt sich eine Schnittlänge des Schneidgutes einstellen. Durch die Schaltwelle lässt sich auswählen, ob das Schneidelement im Betrieb in der Ruhe- oder in der Schneidstellung bzw. welche Schneidelemente einer Mehrzahl von Schneidelementen im Betrieb in der Ruhe- oder in der Schneidstellung positioniert sein sollen.

Aufgabe der vorliegenden Erfindung ist es, eine gattungsgemäße Schneidvorrichtung mit einem geringeren Bauraumbedarf bei größtmöglicher Betriebszuverlässigkeit bereitzustellen.

Erfindungsgemäß wird die Aufgabe dadurch gelöst, dass das Stellelement einen in der einen Schaltstellung im Betrieb an der Schaltwelle anliegenden Schaltkontaktbereich hat. Somit ist das Stellelement zumindest in der einen Schaltstellung der Schaltwelle durch unmittelbares Anliegen an der Schaltwelle damit gekoppelt.

Der Förderkanal der Schneidvorrichtung wird insbesondere von einer Förderkanalwandung begrenzt. Die Förderkanalwandung hat insbesondere schlitzförmige Ausnehmungen, durch die sich das Schneidelement zumindest in der Schneidstellung insbesondere hindurcherstreckt. Gegenüber der Förderkanalwandung ist der Förderkanal insbesondere begrenzt durch einen Förder- und Schneidrotor. Im Betrieb der Schneidvorrichtung und bei Positionierung des Schneidelementes in der Schneidstellung befindet sich das Schneidelement bei Betrachtung in Förderrichtung des Schneidgutes wiederkehrend zwischen zwei rotierenden und zum Schneidelement benachbarten Mitnehmern des Förder- und Schneidrotors.

In der Ruhestellung ist das Schneidelement nicht oder nur zu einem geringen Teil innerhalb des Förderkanals angeordnet. In der Schneidstellung des Schneidelementes ist demgegenüber ein größerer Anteil, insbesondere eine Schneide des Schneidelementes, im Förderkanal angeordnet. Bevorzugt wird das Schneidelement aus der Ruhestellung in die Betriebsstellung aufwärts verschwenkt.

In der Schneidstellung des Schneidelementes wirkt das zumindest im Betrieb am Schneidelement anliegende Stellelement mit einer Kraft auf das Schneidelement ein. Diese Kraft wird zumindest teilweise durch das Rückstellelement, was insbesondere unmittelbar am Stellelement angeordnet ist, bereitgestellt. Durch die Kraft wird das Schneidelement zum einen in die Schneidstellung geführt und zum anderen darin gehalten.

Die Kraft zum Halten des Schneidelementes in der Schneidstellung ist im Betrieb so groß, dass ein zuverlässiges Schneiden des durch den Förderkanal bewegten Schneidgutes möglich ist. Gleichzeitig ist die Kraft so gering, dass bei einem Fremdkörper wie einem Stein im Schneidgut das Schneidelement vor dem Fremdkörper ausweichen, d.h. entgegen die durch das Stellelement aufgebrachten Kraft zurückschwenken kann. Hat der Fremdkörper daraufhin den Förderkanal durchtreten, wird das Schneidelement durch die Stellvorrichtung und das Rückstellelement in die Schneidstellung zurückgeführt.

Durch die Schaltwelle lässt sich insbesondere zwischen zwei Betriebsphasen einstellen, in welcher Stellung sich das Schneidelement im folgenden Betrieb befinden soll. In jeder seiner möglichen Schaltstellungen definiert die Schaltwelle, ob sich das Schneidelement in der Schneidstellung oder in der Ruhestellung befinden soll. Insbesondere ist die Schaltwelle so ausgebildet, dass das Stellelement im Betrieb der Schneidvorrichtung entweder in der Schneidstellung oder in der Ruhestellung an der Schaltwelle anliegt. Dazu hat die Schaltwelle entlang ihres Umfangs insbesondere unterschiedliche Geometrien, durch welche letztlich die Stellung des Schneidelementes vordefiniert wird.

Im Betrieb befindet sich die Schneidvorrichtung dann, wenn Schneidgut durch den Förderkanal gefördert und ggf. durch das Schneidelement geschnitten wird.

Indem das Stellelement sowohl zum Anliegen am Schneidelement als auch zum Anliegen an der Schaltwelle ausgebildet ist, sind weitere Bauteile zur Kraftübertragung zwischen der Schaltwelle und dem Stellelement nicht weiter notwendig. Dadurch ist sowohl der Bauraum der Schneidvorrichtung minimiert als auch die Anzahl von zur Funktion derer notwendigen Bauteilen auf ein Minimum reduziert. Dadurch können Ausfallzeiten der Schneidvorrichtung deutlich reduziert werden.

Die Schaltwellenachse verläuft insbesondere quer zur Förderrichtung des Erntegutes im Förderkanal. Die Schaltwelle ist insbesondere zur Einstellung einer Mehrzahl von Stellelementen und damit Schneidelementen ausgebildet. Bevorzugt hat die Schaltwelle einen in Richtung der Schaltwellenachse durchgehenden Schaltwellengrundkörper sowie eine Mehrzahl von in Richtung der Schaltwellenachse aneinander anschließende Schaltwellenaufsätze, die zumindest in der einen Schaltstellung zur Anlage an dem Schaltkontaktbereich des Stellelementes ausgebildet sind.

Bevorzugt ist das Stellelement schwenkbar um die Stellschwenkachse gelagert. Besonders bevorzugt ist der Schaltkontaktbereich von einem ersten Schenkel des Stellelementes umfasst. Der erste Schenkel erstreckt sich im Betrieb in der Schneidstellung des Schneidelementes von der Stellschwenkachse aus vom Schneidelement weg. Insbesondere besteht das Stellelement aus zwei zueinander starren Schenkeln, die sich jeweils im Wesentlichen radial von der Stellschwenkachse weg erstrecken. Durch die Anordnung des Schaltkontaktbereichs am vom Schneidelement abgewandten Schenkel lässt sich die Stellvorrichtung trotz der Mehrfachfunktion des Stellelementes einfach aufbauen und Bauteilkollisionen vermeiden. Insbesondere kann eine größere radiale Erstreckung des Stellelementes von der Stellschwenkachse, welche mit der Anordnung des Schaltkontaktbereiches an dem dem Schneidelement zugewandten Schenkel notwendigerweise einherginge, vermieden werden.

Vorzugsweise weist der Schaltkontaktbereich eine Vertiefung auf, in die sich in der Schaltstellung im Betrieb ein Schaltelement der Schaltwelle erstreckt. Das Schaltelement ist insbesondere eine, bevorzugt von einem Schaltwellenaufsatz umfasste, Nocke, die sich von der Schaltwellenachse radial weg erstreckt. Alternativ hat bevorzugt das Stellelement zumindest einen Zapfen, der sich in der Schaltstellung im Betrieb in eine Vertiefung der Schaltwelle erstreckt. Durch die Paarung aus Vertiefung und Schaltelement/Zapfen lässt sich in der Schaltstellung ein zuverlässiges Eingreifen von Schaltwelle und Stellelement ineinander erreichen und so ein unbeabsichtigtes Verlassen der Schaltstellung vermeiden. Das Rückstellelement drückt im Betrieb in der Schaltstellung insbesondere das Stellelement gegen die Schaltwelle, insbesondere gegen das Schaltelement.

In einer vorteilhaften Ausgestaltung der Erfindung hat die Schneidvorrichtung ein Kuppelelement, das zum Lösen des Stellelementes von der Schaltwelle ausgebildet ist. Insbesondere liegt das Kuppelelement in einer Kuppelstellung an einem Kuppelkontaktbereich des Stellelementes an. Das Kuppelelement sorgt dafür, dass zu einer Überführung der Schaltwelle in eine andere Schaltstellung im Wesentlichen kein Drehmoment überwunden werden muss, das aus einem Anliegen des Stellelementes an der Schaltwelle resultierte. Stattdessen beabstandet das Kuppelelement das Stellelement vom Schaltelement, bevor die Schaltwelle in eine andere Schaltstellung überführt wird. Dadurch kommt es zu geringeren Bauteilbelastungen und dadurch zu geringeren Ausfallzeiten.

Das Kuppelelement ist insbesondere schwenkbar gelagert. Mit seiner Überführung in die Kuppelstellung legt es sich bevorzugt an den Kuppelkontaktbereich des Stellelementes an. Der Kuppelkontaktbereich ist besonders bevorzugt weiter von der Stellschwenkachse beabstandet als der Schaltkontaktbereich. Der Kuppelkontaktbereich ist vorzugsweise Teil des ersten Schenkels des Stellelementes. Durch diesen Aufbau lässt sich ein Lösen des Stellelementes von der Schaltwelle schon mit einer verhältnismäßig geringen Kraft zuverlässig erreichen und kann das Kuppelelement entsprechend klein bauen. Außerdem kann der Abstand zwischen dem Schneidelement und der Stellschwenkachse gering gehalten werden.

Bevorzugt wird das Stellelement durch ein Überführen des Kuppelelementes in die Kuppelstellung sowohl von der Schaltwelle als auch vom Schneidelement gelöst. Insbesondere wirkt das Kuppelelement hinsichtlich der Schwenkrichtung des Stellelementes dem Rückstellelement entgegen. Das Rückstellelement stellt insbesondere nach Rücküberführung des Kuppelelementes aus der Kuppelstellung ein Anliegen des Stellelementes am Schneidelement und/oder an der Schaltwelle sicher.

Vorzugsweise ist das Kuppelelement insbesondere um die ortsfeste Stellschwenkachse schwenkbar gelagert. Durch die Art der Lagerung kann die Kuppelfunktion besonders zuverlässig realisiert werden. Dadurch, dass das Stellelement und das Kuppelelement um die gleiche Achse schwenkbar angeordnet sind, baut die Schneidvorrichtung außerdem besonders kompakt und wird bei einer Überführung des Kuppelelementes in die Kuppelstellung eine Reibung zwischen Kuppel- und Stellelement vermieden.

Bevorzugt ist am Kuppelelement ein das Kuppelelement aus der Kuppelstellung rückführendes Kuppelrückstellelement angeordnet. Das Kuppelrückstellelement ist insbesondere als Zugfeder ausgebildet. Besonders bevorzugt ist am Kuppelelement ein einfach wirkender Hydraulikzylinder angeordnet, durch den das Kuppelelement bevorzugt in die Kuppelstellung überführbar ist. Durch das Kuppelrückstellelement wird die Rückführung aus der Kuppelstellung auf mechanisch besonders einfache Weise zuverlässig realisiert. Außerdem erübrigt sich dadurch ein weiterer bzw. komplexer aufgebauter Hydraulikzylinder.

Vorzugsweise ist das Rückstellelement an einem zweiten Schenkel des Stellelementes angeordnet. Der zweite Schenkel erstreckt sich in der Schneidstellung des Schneidelementes von der Stellschwenkachse zum Schneidelement. Das Rückstellelement ist insbesondere als Zugfeder ausgebildet. Ein Ende des Rückstellelementes ist bevorzugt ortsfest am Maschinenrahmen angeordnet. Insbesondere erstreckt sich das Rückstellelement zumindest in der Schneidstellung des Schneidelementes und in einer Seitenansicht bzw. in einem Längsschnitt der Schneidvorrichtung betrachtet zumindest teilweise hinter dem Schneidelement. Dadurch ist das Rückstellelement besonders platzsparend angeordnet. Die Rückstellkraft wirkt zumindest im Wesentlichen in radialer Richtung auf das Stellelement. Durch die Anordnung des Rückstellelementes am zweiten Schenkel wird die Rückstellkraft des Rückstellelementes in den Bereich in das Stellelement eingeleitet, mit dem das Stellelement auch an dem Schneidelement anliegt. Insofern kommt es zu einer besonders unmittelbaren Kraftübertragung auf das Schneidelement und der Belastung nur eines geringen Teils des Stellelementes, was dessen Ausfallwahrscheinlichkeit reduziert.

In einer vorteilhaften Ausgestaltung der Erfindung ist die Stellvorrichtung derart ausgebildet, dass das Schneidelement im Betrieb und bei Anliegen des Schaltkontaktbereichs an der Schaltwelle in der Ruhestellung angeordnet ist. Dadurch liegt das Stellelement im Betrieb entweder am Schneidelement oder an der Schaltwelle an. Dadurch werden extreme Bauteilbelastungen vermieden, die mit einem gleichzeitigen Anliegen sowohl am Schneidelement als auch an der Schaltwelle einhergingen.

Vorzugsweise hat die Schneidvorrichtung eine Antriebsvorrichtung zu einer kontinuierlichen Rotation der Schaltwelle um mehr als 360°. Insbesondere weist die Antriebsvorrichtung einen Hydraulikmotor, einen Elektromotor oder einen pneumatisch arbeitenden Motor auf. Durch die Antriebsvorrichtung ist eine ununterbrochene Rotation bei insbesondere konstanter Drehgeschwindigkeit ermöglicht, wobei dafür keine manuelle Kraft durch einen Bediener einzuleiten ist. Insbesondere ist die Antriebsvorrichtung zur kontinuierlichen, mehrfachen und ununterbrochenen Umdrehung der Schaltwelle ausgebildet. Ebenfalls ist es möglich, die Rotation schnell beginnend und dann langsamer werdend und umgekehrt durchzuführen. Durch die Antriebsvorrichtung kann durch die Schaltwelle neben ihrer Schaltfunktion eine Reinigungsfunktion erreicht werden. Durch Rotation der Schaltwelle, insbesondere mit seinen sich radial von der Schaltwellenachsen erstreckenden Schaltelementen, lassen sich Schneidgutablagerungen in der Umgebung der Schaltwelle aus der Schneidvorrichtung, insbesondere aus der sogenannten Messerlade der Schneidvorrichtung, ausfördern. Dadurch wird vermieden, dass sich Schneidgutablagerungen beispielsweise zwischen dem Stellelement und dem Schaltelement oder zwischen dem Schneidelement und dem Stellelement ablagern und dadurch das Zusammenwirken der genannten Komponenten beeinträchtigen.

Insbesondere umfasst die Antriebsvorrichtung einen Winkelsensor. Durch diesen lassen sich durch die Antriebsvorrichtung bevorzugt beliebige, vorgewählte Schaltstellungen automatisch anfahren, ohne die kontinuierliche Rotation unterbrechen zu müssen.

Bevorzugt hat die Schneidvorrichtung eine Sperrvorrichtung, die zur Sperrung der Antriebsvorrichtung bei Anliegen des Schaltkontaktbereiches an der Schaltwelle, insbesondere bei fehlender Anordnung des Kuppelelementes in der Kuppelstellung, ausgebildet ist. Die Sperrvorrichtung umfasst insbesondere einen Sensor zur Feststellung der Position des Stellelementes bzw. des Kuppelelementes. Mit der Sperrung wird ein Antrieb der Schaltwelle vermieden und erst freigegeben, wenn die Schaltwelle ohne Kontakt zum Stellelement rotieren kann. Dadurch wird eine unnötig hohe Belastung der genannten Bauteile durch Reibung aneinander wie auch insbesondere des Hydraulikmotors vermieden.

Besonders bevorzugt ist die Antriebsvorrichtung zur Bereitstellung einer Schaltwellenrotationsgeschwindigkeit in einem Bereich von 10 bis 80 Umdrehungen pro min ausgebildet. Durch diese Rotationsgeschwindigkeiten der Schaltwelle wird ein Ausfördern von landwirtschaftlichen Schneidgutablagerungen wie Heu- oder Strohablagerungen besonders effektiv möglich und dadurch in diesem Aufgabengebiet eine optimale Schonung der Schneidvorrichtungsbauteile ermöglicht.

Vorzugsweise hat die Antriebsvorrichtung ein Getriebe zur Untersetzung einer von einer Schaltwellendrehzahl abweichenden Antriebsdrehzahl, insbesondere des Hydraulikmotors oder eines alternativen Elektromotors. Insbesondere umfasst das Getriebe eine Stirnradpaarung, durch die die Antriebsdrehzahl mit ihrer Übertragung auf die Schaltwelle zur Schaltwellendrehzahl reduziert wird. Durch das Getriebe lassen sich Antriebsmotoren mit einer ausreichenden Antriebsleistung verwenden, deren Bauraum aufgrund eines großen Drehzahl-Drehmoment-Verhältnisses gering ist.

Vorzugsweise ist eine radiale Erstreckung des Schaltelementes von der Schaltwellenachse mindestens 1,3-fach, insbesondere mindestens 1,5-fach so groß wie die radiale Erstreckung eines zumindest im Wesentlichen zylinderförmigen Abschnittes der Schaltwelle von der Schaltwellenachse. Insbesondere hat die Schaltwelle eine Mehrzahl von Schaltelementen, die in Richtung der Schaltwellenachse voneinander beabstandet sind und je einem Schneidelement zugeordnet sind. Zwischen zwei dieser Schaltwellenelemente befindet sich insbesondere der im Wesentlichen zylinderförmige Abschnitt der Schaltwelle. Durch den deutlich größeren Radius der Schaltelemente gegenüber diesem Abschnitt erreichen diese eine besonders große Förderfunktion und gewährleisten damit eine schnelle Reinigung der Schneidvorrichtung.

Besonders bevorzugt weist die Schaltwelle zwischen zwei in Richtung der Schaltwellenachse voneinander beabstandeten Schaltelementen zumindest ein insbesondere elastisches Förderelement auf. Zwischen den Schaltelementen ist das Förderelement insofern angeordnet, als dass es an einem axialen Schaltwellenabschnitt angeordnet ist, der zwischen den axialen Schaltwellenabschnitten mit den Schaltelementen angeordnet ist. Das Förderelement ist insbesondere als Bürste, starrer Mitnehmer oder ähnlicher Aufsatz ausgebildet. Die radiale Erstreckung des Förderelementes von der Schaltwellenachse ist insbesondere größer als die radiale Erstreckung der Schaltelemente von der Schaltwellenachse. Durch diesen großen Radius wird die Förderfunktion weiter erhöht und lassen sich insbesondere auch die Schneidgutablagerungen ausfördern, welche zwischen zwei Stellelementen bzw. zwischen zwei Schneidelementen angeordnet sind.

In einer vorteilhaften Ausgestaltung der Erfindung hat die Schneidvorrichtung zumindest ein mit der Schaltwelle gekoppeltes und in Abhängigkeit von dessen Rotation rotierendes Reinigungselement, dessen Reinigungsrotationsachse insbesondere parallel zur Schaltwellenachse angeordnet ist. Das Reinigungselement ist insbesondere über eine Stirnradpaarung mit der Schaltwelle gekoppelt und wird bevorzugt ebenso durch die Antriebsvorrichtung angetrieben. Durch das gesonderte Reinigungselement lassen sich auch weiter von der Schaltwelle beabstandete Bereiche der Schneidvorrichtung automatisch reinigen.

Die Aufgabe wird ebenso gelöst durch eine landwirtschaftliche Maschine mit einer Schneidvorrichtung nach einem der vorhergehenden Ansprüche. Bevorzugt handelt es sich bei der landwirtschaftlichen Maschine um eine Ballenpresse oder einen Ladewagen, durch welche im Betrieb insbesondere Heu oder Stroh unmittelbar vom Erdboden aufgenommen und geschnitten werden können.

Weitere Einzelheiten und Vorteile der Erfindung sind den nachfolgend beschriebenen, schematischen dargestellten Ausführungsbeispielen zu entnehmen; es zeigen:
- Fig. 1: einen Längsschnitt durch eine erfindungsgemäße Schneidvorrichtung mit einem Schneidelement in einer Schneidstellung,
- Fig. 2: einen Längsschnitt durch die Schneidvorrichtung gemäß Fig. 1 mit dem Schneidelement in einer Reinigungsstellung,
- Fig. 3: einen Längsschnitt durch die Schneidvorrichtung gemäß Fig. 1 mit dem Schneidelement in einer Ruhestellung,
- Fig. 4: eine Übersichtsdarstellung eines Teils der Schneidvorrichtung gemäß Fig. 1,
- Fig. 5: eine Übersichtsdarstellung des Teils gemäß Fig. 4 aus einer gegenüberliegenden Perspektive,
- Fig. 6: eine Übersichtsdarstellung einer Schaltwelle einer erfindungsgemäßen Schneidvorrichtung,
- Fig. 7: einen schematischen Längsschnitt einer erfindungsgemäßen Ballenpresse mit der Schneidvorrichtung gemäß Fig. 1.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1. Sofern sinnvoll, sind funktional gleichwirkende Teile mit identischen Bezugsziffern versehen.

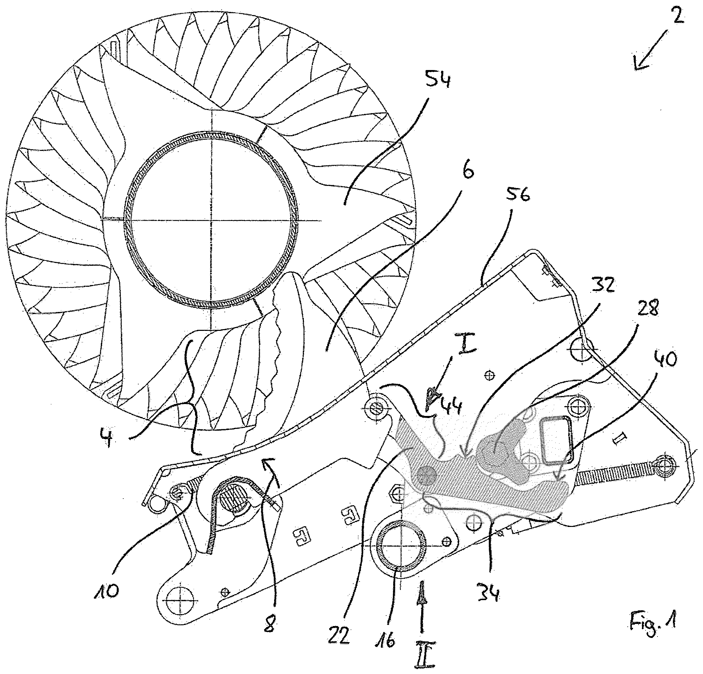

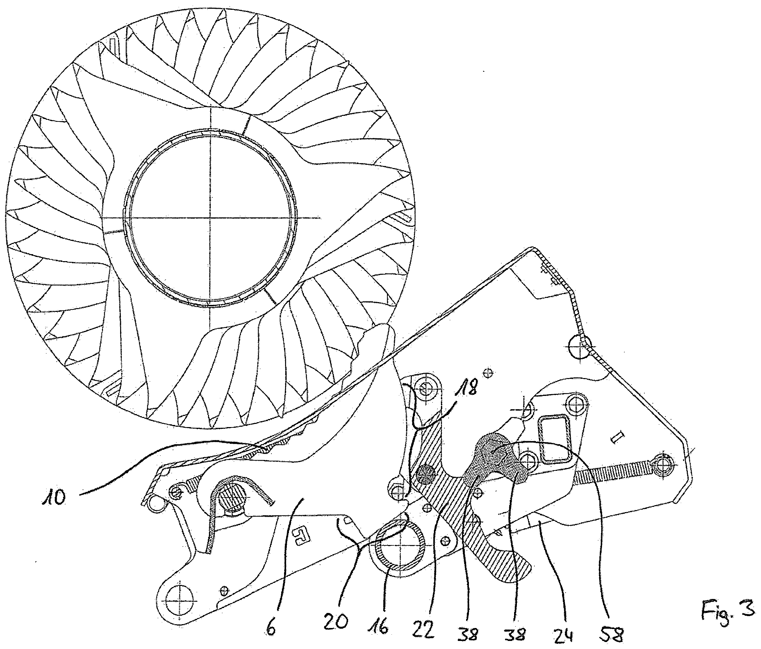

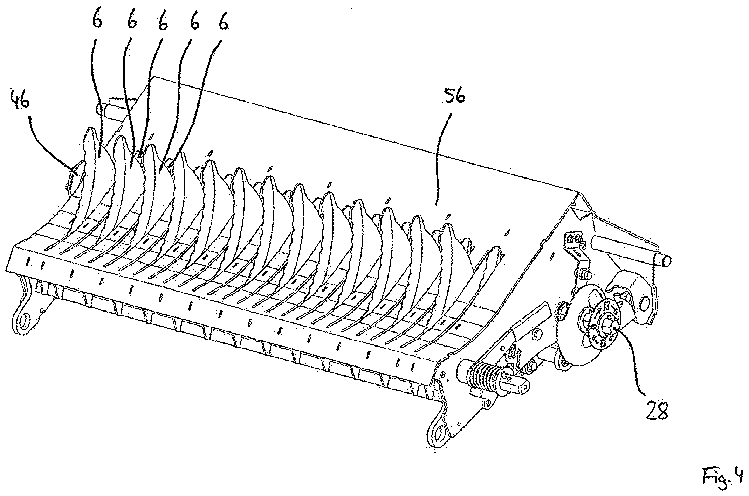

Die Fig. 1 bis 3 zeigen eine erfindungsgemäße Schneidvorrichtung 2 in einem Längsschnitt. Die Schneidvorrichtung 2 bildet einen Förderkanal 4, durch den im Betrieb insbesondere landwirtschaftliches Schneidgut gefördert und dabei insbesondere geschnitten wird. Der Förderkanal 4 wird begrenzt durch einen Förder- und Schneidrotor 54 einerseits und eine Förderkanalwandung 56 andererseits. Die Schneidvorrichtung 2 hat eine Mehrzahl von schwenkbar gelagerten Schneidelementen 6 (vergl. auch Fig. 4), wovon in den Fig. 1 bis 3 jeweils eines dargestellt ist. Das Schneidelement 6 ist durch eine Bewegung in eine erste Schwenkrichtung 8 aus einer Ruhestellung (vergl. Fig. 3) in eine Schneidstellung (vergl. Fig. 1) überführbar. In der Schneidstellung ist das Schneidelement 6 zum Schneiden des Schneidgutes mit einer Schneide im Förderkanal 4 positioniert.

Die Schneidvorrichtung 2 hat eine Stellvorrichtung (I) zum Rückführen des Schneidelementes 6 in die Schneidstellung und zum Halten des Schneidelementes 6 in der Schneidstellung. Die Stellvorrichtung (I) umfasst ein Stellelement 22 und ein Rückstellelement 10. Das Stellelement 22 ist schwenkbar um eine Stellschwenkachse 36 gelagert. Das Rückstellelement 10 ist einenends ortsfest an einem Maschinenrahmen und anderenends an einem zweiten Schenkel 44 des Stellelementes 22 angeordnet.

In der Schneidstellung des Schneidelementes 6 liegt das Stellelement 22 mit einer Rolle an einem ersten Oberflächenabschnitt 18 des Schneidelementes 6 an. Durch eine Zugkraft des Rückstellelementes 10 wird das Stellelement 22 in eine Vertiefung des Schneidelementes 6 gezogen, wodurch das Schneidelement 6 im Betrieb möglichst in der Schneidstellung verbleibt.

Zur Überführung des Schneidelementes 6 aus der Ruhestellung in die Schneidstellung wird das Stellelement 22 aus seiner in Fig. 3 dargestellten Position an den ersten Oberflächenabschnitt 18 angelegt. Dadurch wird ein erstes Drehmoment in die Schwenkrichtung 8 auf das Schneidelement 6 aufgebracht. Dadurch ist das Schneidelement regelmäßig aus der Ruhestellung zu lösen und gleitet aufwärts und an dem Stellelement 22 entlang. Aufgrund des dabei stattfindenden Annäherns des zweiten Schenkels 44 des Stellelementes 22 an die Schwenkachse des Schneidelementes 6 und die damit einhergehende Verkürzung des Rückstellelementes 10 sinkt das auf das Schneidelement 6 aufgebrachte Drehmoment mit dem Hinaufschwenken des Schneidelementes 6, ausgehend vom ersten Drehmoment, ab.

Bei Auftreten eines Fremdkörpers, insbesondere eines Steins im Betrieb der Schneidvorrichtung 2 innerhalb des Förderkanals 4 ermöglicht die Stellvorrichtung (I) ein Zurückschwenken des Schneidelementes 6 aus der Schneidstellung entgegen der Zugkraft des Rückstellelementes 10. Nach Passieren des Fremdkörpers bewirkt das Rückstellelement 10 ein Rückstellen des Schneidelementes 6 in die Schneidstellung.

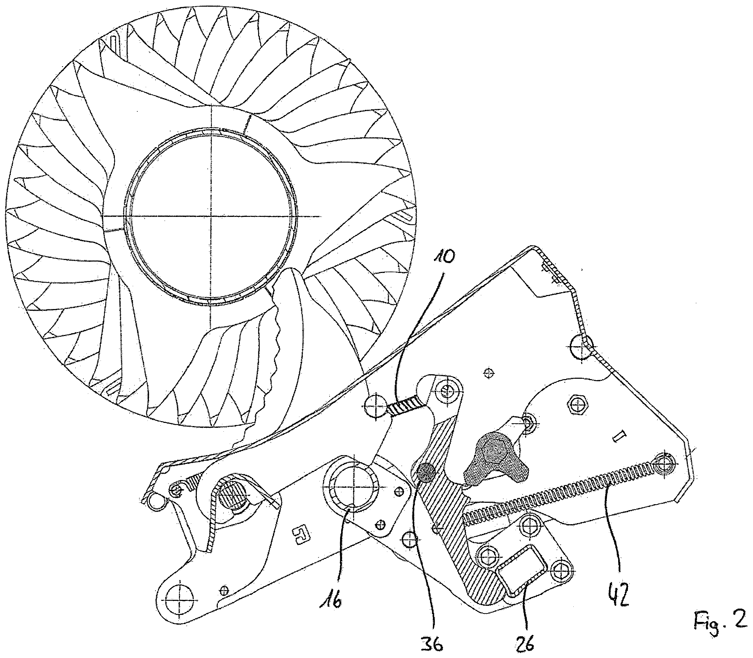

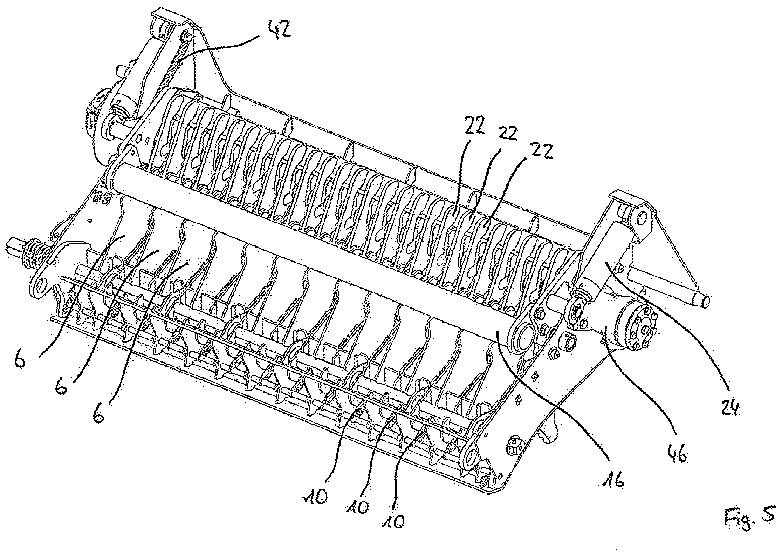

Zu einer Überführung des Schneidelementes 6 aus der Schneidstellung in die Ruhestellung dient ein Kuppelelement 26 sowie die Schaltwelle 28. Das Kuppelelement 26 ist wie das Stellelement 22 schwenkbar um die Stellschwenkachse 36 gelagert. Zur Ermöglichung eines schwerkraftbedingten Rückschwenkens des Schneidelementes 6 in die Ruhestellung lässt sich das Kuppelelement 26 zunächst gegen einen Kuppelkontaktbereich 40 des Stellelementes 22 verschwenken (vergl. Fig. 2). Diese Verschwenkung ist insbesondere mit einem mit dem Kuppelelement gekoppelten Hydraulikzylinder 24 (vergl. Fig. 5) herbeizuführen. Der Kuppelkontaktbereich 40 ist dabei an einem ersten Schenkel 34 des Stellelementes 22 angeordnet.

Nach einer Überführung des Kuppelelementes 26 in die in Fig. 2 dargestellte Kuppelstellung ist das Stellelement 22 sowohl von dem Schneidelement 6 als auch von der Schaltwelle 28 beabstandet. Die Schaltwelle 28 ist um eine Schaltwellenachse 58 drehbar gelagert und umfasst entlang ihres Umfangs mehrere Schaltelemente 38. Die Schaltwelle 28 ist in Fig. 1 einer ersten Schaltstellung zur Positionierung des Schneidelementes 6 in der Schneidstellung angeordnet. Nach Beabstandung des Stellelementes 22 von der Schaltwelle 28 ist die Schaltwelle 28 durch Verschwenkungen um < 360° in weitere Schaltstellungen wie z.B. in Fig. 2 überführbar. In den weiteren Schaltstellungen ist dem Schaltkontaktbereich 32 entgegen den ersten Schaltstellungen ein Schaltelement 38 zur Positionierung des Schneidelementes 6 in der Ruhestellung zugewandt.

Nach einer Überführung der Schaltwelle 28 in eine weitere Schaltstellung lässt sich das Kuppelelement 26 aus der Kuppelstellung (vergl. Fig. 2) in eine Lösestellung (vergl. Fig. 3) von einem Kuppelrückstellelement 42 rücküberführen. Bedingt durch das Rückstellelement 10 folgt das Stellelement 22 der Bewegung des Kuppelelementes 26 dabei so weit, bis das Stellelement 22 mit einem Schaltkontaktbereich an einem der Schaltelemente 38 der Schaltwelle 28 anliegt. Der Schaltkontaktbereich 32 ist dabei am ersten Schenkel 34 des Stellelementes 22 angeordnet. Der Schaltkontaktbereich 32 weist eine Vertiefung auf, in die sich das eine Schaltelement 38 in der weiteren Schaltstellung und nach Lösen des Kuppelelementes 26 teilweise erstreckt (vergl. Fig. 3). Dadurch wird ein Kontakt zwischen dem Schneidelement 6 und dem Stellelement 22 vermieden, wodurch das Schneidelement 6 in der Ruhestellung verbleibt. Eine Überführung der Schaltwelle 28 von der weiteren Schaltstellung in eine erste Schaltstellung lässt sich analog herbeiführen.

Starr mit dem Kuppelelement 26 verbunden ist ein Zweitstellelement 16 einer zweiten Stellvorrichtung (II). Das Zweitstellelement 16 ist damit ebenso wie das Kuppelelement 26 um die Stellschwenkachse 36 verschwenkbar. Dabei ist das Zweitstellelement 16 mit einem zweiten Oberflächenabschnitt 20 des Schneidelementes 6 in Kontakt zu bringen.

Das Zweitstellelement 16 dient zum Verschwenken des Schneidelementes 6 aus der Ruhestellung in die erste Schwenkrichtung 8. Das Zweitstellelement 16 ist zum Aufbringen eines zweiten Drehmomentes auf das Schneidelement 6 in der Ruhestellung ausgebildet, wobei das zweite Drehmoment größer ist als das von der Stellvorrichtung (I) auf das Schneidelement 6 aufzubringende erste Drehmoment in der Ruhestellung. Das zweite Drehmoment ist so groß, dass das Schneidelement 6 auch bei Vorhandensein von Schneidgutablagerungen zwischen dem Schneidelement 6 und der Förderkanalwandung 56 zuverlässig aus der Ruhestellung in die erste Schwenkrichtung 8 verschwenkt werden kann, wenn ein solches Verschwenken durch das kleinere erste Drehmoment nicht mehr zu verwirklichen ist.

Das Zweitstellelement 16 erstreckt sich unterhalb einer Mehrzahl von Schneidelementen 6 (vergl. Fig. 5). Jedem Schneidelement 6 ist dabei eine Stellvorrichtung (I) mit je einem Stellelement 22 zugeordnet. Das Kuppelelement 26 hat ebenso wie das Zweitstellelement 16 eine Breite, die im Wesentlichen einer Breite des Förderkanals 4 entspricht, wodurch durch das Kuppelelement 26 sämtliche Stellelemente 22 sowohl von dem jeweiligen Schneidelement 6 als auch von der Schaltwelle 28 gelöst werden können.

Die Schneidvorrichtung 2 hat eine einen Hydraulikmotor 46 aufweisende Antriebsvorrichtung zu einer kontinuierlichen Rotation der Schaltwelle 28 um mehr als 360° (vergl. Fig. 4 und 5). Außerdem hat die Schneidvorrichtung 2 eine nicht dargestellte Sperrvorrichtung zur Sperrung der Antriebsvorrichtung bei Anliegen des Schaltkontaktbereichs 32 an der Schaltwelle 28, insbesondere bei fehlender Anordnung des Kuppelelementes 26 in der Kuppelstellung.

Der Hydraulikmotor 46 ist über ein nicht gezeigtes Getriebe zur Untersetzung seiner Antriebsdrehzahl mit der Schaltwelle 28 gekoppelt. Durch einen Winkelsensor ist die Antriebsvorrichtung zur automatischen Einstellung unterschiedlicher Schaltstellungen der Schaltwelle 28 ausgebildet.

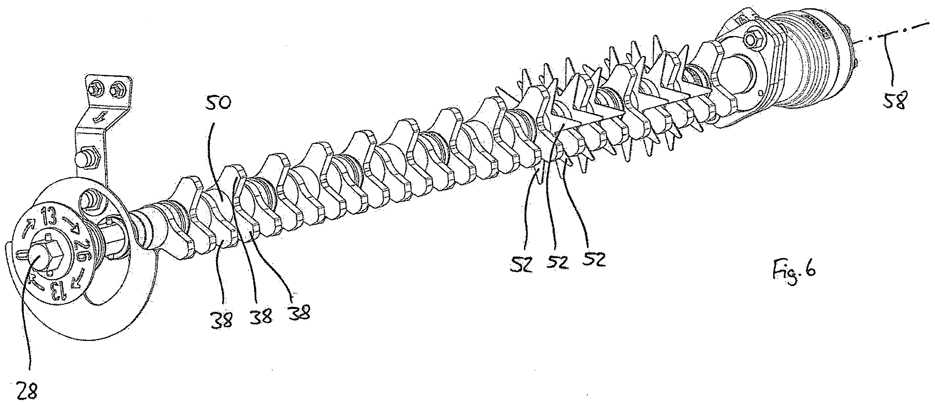

Die Schaltelemente 38 der Schaltwelle 28 haben eine radiale Erstreckung von der Schaltwellenachse 58, die mehr als 1,3-fach so groß ist wie die radiale Erstreckung eines zylinderförmigen Abschnittes 50 der Schaltwelle 28 von der Schaltwellenachse 58 (vergl. Fig. 6). Zwischen zwei in Richtung der Schaltwellenachse 58 benachbarten Schaltelementen 38 weist die Schaltwelle 28 insbesondere ein Förderelement 52 auf. Fig. 6 zeigt exemplarische Förderelemente 52 nur auf einem Abschnitt der Schaltwelle 28. Bevorzugt sind derartige Förderelemente 52 entlang der gesamten Schaltwellenlänge an der Schaltwelle 28 angeordnet.

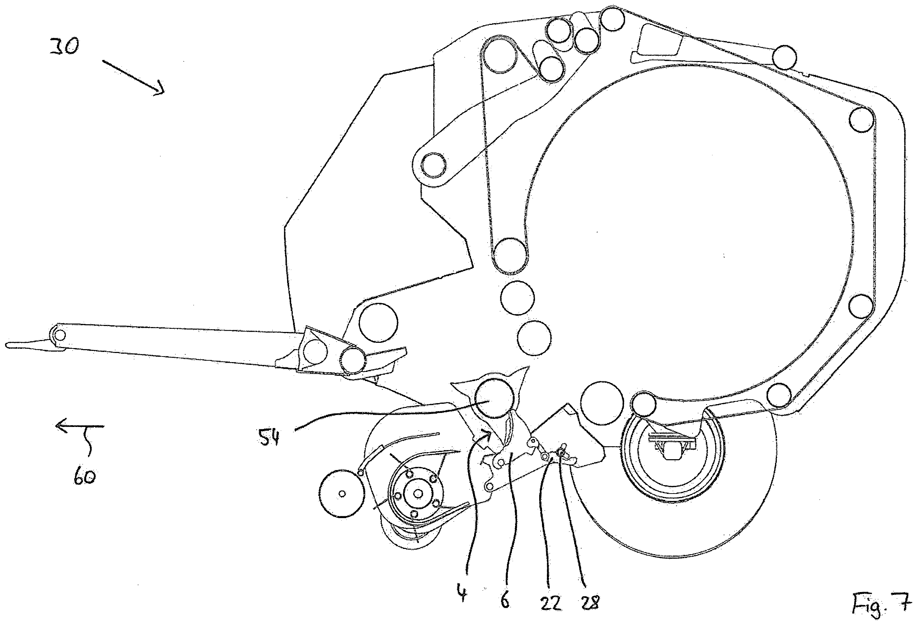

Fig. 7 zeigt eine Ballenpresse 30 mit einer erfindungsgemäßen Schneidvorrichtung 2. Im Betrieb wird die Ballenpresse 30 in eine Fahrtrichtung 60 fortbewegt und dabei landwirtschaftliches Schneidgut wie Heu oder Stroh vom Erdboden aufgenommen - und unter anderem vom Förder- und Schneidrotor 54 durch den Förderkanal 4 gefördert. Dabei wird es unter anderem von dem in Schneidstellung dargestellten Schneidelement geschnitten und anschließend einer Ballenkammer zur Ausbildung eines Rundballens zugeführt.

## Patentansprüche

1. Schneidvorrichtung (2) zum Fördern und Schneiden insbesondere landwirtschaftlichen Schneidgutes, mit einem Förderkanal (4) und zumindest einem schwenkbar gelagerten Schneidelement (6), welches durch eine Bewegung in eine erste Schwenkrichtung (8) aus einer Ruhestellung in eine Schneidstellung überführbar ist, in der das Schneidelement (6) zum Schneiden des Schneidgutes zumindest teilweise innerhalb des Förderkanals (4) positioniert ist, mit einer Stellvorrichtung (I), umfassend ein zumindest in der Schneidstellung des Schneidelementes (6) im Betrieb am Schneidelement (6) anliegendes und insbesondere schwenkbar um eine Stellschwenkachse (36) gelagertes Stellelement (22), mit einer in unterschiedliche Schaltstellungen überführbaren, drehbar um eine Schaltwellenachse (58) gelagerten Schaltwelle (28), mit der das Stellelement (22) in zumindest einer der Schaltstellungen der Schaltwelle (28) im Betrieb gekoppelt ist, und mit einem Rückstellelement (10) zum Rückführen des Schneidelementes (6) in die Schneidstellung und zum Halten des Schneidelementes (6) in der Schneidstellung,
**dadurch gekennzeichnet, dass** das Stellelement (22) einen in der Schaltstellung im Betrieb an der Schaltwelle (28) anliegenden Schaltkontaktbereich (32) hat.

2. Schneidvorrichtung (2) nach Anspruch 1, **dadurch gekennzeichnet, dass** der Schaltkontaktbereich (32) von einem ersten Schenkel (34) des Stellelementes (22) umfasst ist, der sich im Betrieb in der Schneidstellung des Schneidelementes (6) von der Stellschwenkachse (36) aus vom Schneidelement (6) wegerstreckt.

3. Schneidvorrichtung (2) nach Anspruch 1 oder 2, **dadurch gekennzeichnet, dass** der Schaltkontaktbereich (32) eine Vertiefung aufweist, in die sich in der Schaltstellung im Betrieb ein Schaltelement (38) der Schaltwelle (28) erstreckt.

4. Schneidvorrichtung (2) nach einem der vorhergehenden Ansprüche, **gekennzeichnet durch** ein Kuppelelement (26), das zum Lösen des Stellelementes (22) von der Schaltwelle (28) ausgebildet ist und in einer Kuppelstellung insbesondere an einem Kuppelkontaktbereich (40) des Stellelementes (22) anliegt.

5. Schneidvorrichtung (2) nach Anspruch 4, **dadurch gekennzeichnet, dass** der Kuppelkontaktbereich (40) weiter von der Stellschwenkachse (36) beabstandet ist als der Schaltkontaktbereich (32) und/oder Teil des ersten Schenkels (34) des Stellelementes (22) ist.

6. Schneidvorrichtung (2) nach Anspruch 4 oder 5, **dadurch gekennzeichnet, dass** das Kuppelelement (26) um die ortsfeste Stellschwenkachse (36) schwenkbar gelagert sind.

7. Schneidvorrichtung (2) nach einem der Ansprüche 4 bis 6, **dadurch gekennzeichnet, dass** am Kuppelelement (26) ein das Kuppelelement (26) aus der Kuppelstellung rückführendes Kuppelrückstellelement (42) angeordnet ist.

8. Schneidvorrichtung (2) nach einem der vorhergehenden Ansprüche, **dadurch gekennzeichnet, dass** das Betriebsrückstellelement (10) an einem zweiten Schenkel (44) des Stellelementes (22) angeordnet ist, der sich in der Schneidstellung des Schneidelementes (6) von einer Stellschwenkachse (36) zum Schneidelement (6) erstreckt.

9. Schneidvorrichtung (2) nach einem der vorhergehenden Ansprüche, **dadurch gekennzeichnet, dass** die Stellvorrichtung (I) derart ausgebildet ist, dass das Schneidelement (6) im Betrieb und bei Anliegen des Schaltkontaktbereichs (32) an der Schaltwelle (28) in der Ruhestellung angeordnet ist.

10. Schneidvorrichtung (2) nach einem der vorhergehenden Ansprüche, **gekennzeichnet durch** eine zu einer kontinuierlichen Rotation der Schaltwelle (28) um
> 360° ausgebildete Antriebsvorrichtung.

11. Schneidvorrichtung (2) nach Anspruch 10, **gekennzeichnet durch** eine Sperrvorrichtung, die zur Sperrung der Antriebsvorrichtung bei Anliegen des Schaltkontaktbereiches (32) an der Schaltwelle (28), insbesondere bei fehlender Anordnung des Kuppelelementes (26) in der Kuppelstellung ausgebildet ist.

12. Schneidvorrichtung (2) nach Anspruch 10 oder 11, **dadurch gekennzeichnet, dass** eine radiale Erstreckung eines Schaltelementes (38) von der Schaltwellenachse (58) mindestens 1,3-fach, insbesondere mindestens 1,5-fach, so groß ist wie die radiale Erstreckung eines zumindest im Wesentlichen zylinderförmigen Abschnittes (50) der Schaltwelle (28) von der Schaltwellenachse (58).

13. Schneidvorrichtung (2) nach einem der vorhergehenden Ansprüche, **dadurch gekennzeichnet, dass** die Schaltwelle (28) zwischen zwei in Richtung der Schaltwellenachse (58) voneinander beabstandeten Schaltelementen (38) zumindest ein Förderelement (52) aufweist, dessen radiale Erstreckung von der Schaltwellenachse (58) größer ist als die radiale Erstreckung der Schaltelemente (38) von der Schaltwellenachse (58).

14. Schneidvorrichtung (2) nach einem der vorhergehenden Ansprüche, **dadurch gekennzeichnet, dass** zumindest ein mit der Schaltwelle (28) gekoppeltes und in Abhängigkeit von dessen Rotation rotierendes Reinigungselement vorgesehen ist, dessen Rotationsachse parallel zur Schaltwellenachse (58) angeordnet ist.

15. Landwirtschaftliche Maschine, insbesondere Ballenpresse (30) oder Ladewagen, mit einer Schneidvorrichtung (2) nach einem der vorhergehenden Ansprüche.

## Claims

1. Cutting device (2) for conveying and cutting, in particular agricultural material to be cut, having a conveying channel (4) and at least one pivotally mounted cutting element (6) which can be transferred from a rest position into a cutting position by being moved in a first pivot direction (8), in which cutting position the cutting element (6) for cutting the material to be cut is at least partly positioned within the conveying channel (4), having a positioning device (I) comprising a positioning element (22) which abuts the cutting element (6) at least in the cutting position of the cutting element (6) during operation and is in particular pivotally mounted about a positioning pivot axis (36), having a switching shaft (28) which can be transferred into different switching positions and rotatably mounted about a switching shaft axis (58), to which shaft the positioning element (22) is coupled in at least one of the switching positions of the switching shaft (28) during operation, and having a restoring element (10) for restoring the cutting element (6) to the cutting position and for holding the cutting element (6) in the cutting position, **characterized in that** the positioning element (22) has a switching contact region (32) which abuts the switching shaft (28) in the switching position during operation.

2. Cutting device (2) according to claim 1, **characterized in that** the switching contact region (32) is encompassed by a first leg (34) of the positioning element (22), which leg extends from the positioning pivot axis (36) away from the cutting element (6) in the cutting position of the cutting element (6) during operation.

3. Cutting device (2) according to either claim 1 or claim 2, **characterized in that** the switching contact region (32) has a recess into which a switching element (38) of the switching shaft (28) extends in the switching position during operation.

4. Cutting device (2) according to any of the preceding claims, **characterized by** a coupling element (26) which is designed to release the positioning element (22) from the switching shaft (28) and in particular abuts a coupling contact region (40) of the positioning element (22) in a coupling position.

5. Cutting device (2) according to claim 4, **characterized in that** the coupling contact region (40) is further spaced apart from the positioning pivot axis (36) than the switching contact region (32) and/or is part of the first leg (34) of the positioning element (22).

6. Cutting device (2) according to either claim 4 or claim 5, **characterized in that** the coupling element (26) is pivotally mounted about the stationary positioning pivot axis (36).

7. Cutting device (2) according to any of claims 4 to 6, **characterized in that** a coupling restoring element (42) which restores the coupling element (26) from the coupling position is arranged on the coupling element (26).

8. Cutting device (2) according to one of the preceding claims, **characterized in that** the operating restoring element (10) is arranged on a second leg (44) of the positioning element (22), which leg extends from a positioning pivot axis (36) to the cutting element (6) in the cutting position of the cutting element (6).

9. Cutting device (2) according to any of the preceding claims, **characterized in that** the positioning device (I) is designed such that the cutting element (6) is arranged in the rest position during operation and when the switching contact region (32) abuts the switching shaft (28).

10. Cutting device (2) according to any of the preceding claims, **characterized by** a drive device designed for continuous rotation of the switching shaft (28) about > 360°.

11. Cutting device (2) according to claim 10, **characterized by** a locking device which is designed to lock the drive device when the switching contact region (32) abuts the switching shaft (28), in particular when the coupling element (26) is not arranged in the coupling position.

12. Cutting device (2) according to either claim 10 or claim 11, **characterized in that** a radial extension of a switching element (38) from the switching shaft axis (58) is at least 1.3 times, in particular at least 1.5 times, as large as the radial extension of an at least substantially cylindrical portion (50) of the switching shaft (28) from the switching shaft axis (58).

13. Cutting device (2) according to any of the preceding claims, **characterized in that** the switching shaft (28) has at least one conveying element (52) between two switching elements (38) which are spaced apart from one another in the direction of the switching shaft axis (58), of which conveying element the radial extension from the switching shaft axis (58) is greater than the radial extension of the switching elements (38) from the switching shaft axis (58).

14. Cutting device (2) according to any of the preceding claims, **characterized in that** at least one cleaning element, which is coupled to the switching shaft (28), which rotates depending on its rotation, and of which the axis of rotation is arranged in parallel with the switching shaft axis (58), is provided.

15. Agricultural machine, in particular baling press (30) or loading wagon, having a cutting device (2) according to any of the preceding claims.

## Revendications

1. Dispositif de coupe (2) pour transférer et couper notamment des produits agricoles de coupe comprenant :
- un canal de transfert (4) et au moins un élément de coupe (6) monté pivotant, et qui, par un mouvement dans une première direction de pivotement (8) passe d'une position de repos à une position de coupe dans laquelle l'élément de coupe (6) est positionné au moins partiellement dans le canal de transfert (4) pour couper le produit,
- un dispositif de réglage (I) comprenant au moins un élément de réglage (22) monté notamment pivotant autour d'un axe de pivotement de réglage (36) dans la position de coupe de l'élément de coupe (6) appliqué en fonctionnement contre l'élément de coupe (6) et notamment pivotant autour d'un axe de pivotement de réglage (36),
- un arbre de commutation (28) qui peut passer dans différentes positions de commutation en étant monté à rotation autour de l'axe de l'arbre de commutation (58),
- l'élément de réglage (22) étant couplé en fonctionnement dans au moins l'une des positions de commutation de l'arbre de commutation (28), et
- un élément de rappel (10) pour rappeler l'élément de coupe (6) en position de coupe et tenir l'élément de coupe (6) dans cette position de coupe,
dispositif **caractérisé en ce que**
l'élément de réglage (22) a une zone de contact de commutation (32) par laquelle en fonctionnement, en position de commutation il s'applique contre l'arbre de commutation (28).

2. Dispositif de coupe (2) selon la revendication 1,
**caractérisé en ce que**
la zone de contact de commutation (32) de l'élément de réglage (22) est entourée par une première branche (34) qui, en fonctionnement, dans la position de coupe de l'élément de coupe (6), s'écarte de l'élément de coupe (6) à partir de l'axe de pivotement de réglage (36).

3. Dispositif de coupe (2) selon la revendication 1 ou 2,
**caractérisé en ce que**
la zone de contact de commutation (32) a une cavité dans laquelle s'engage un élément de commutation (38) de l'arbre de commutation (28) dans la position de commutation correspondant au fonctionnement de l'élément de commutation (38).

4. Dispositif de coupe (2) selon l'une des revendications précédentes, **caractérisé par**
un élément de couplage (26) réalisé pour dégager l'élément de réglage (22) de l'arbre de commutation (28) et s'appliquant en position de couplage, notamment contre une zone de contact de couplage (40) de l'élément de réglage (22).

5. Dispositif de coupe (2) selon la revendication 4,
**caractérisé en ce que**
la zone de contact de couplage (40) est plus éloignée de l'axe de pivotement de réglage (36) que la zone de contact de couplage de commutation (32) et/ou une partie de la première branche (34) de l'élément de réglage (22).

6. Dispositif de coupe (2) selon la revendication 4 ou 5,
**caractérisé en ce que**
l'élément de couplage (26) est monté pivotant autour de l'axe de pivotement de réglage (16), fixe.

7. Dispositif de coupe (2) selon l'une des revendications 4 à 6, **caractérisé en ce que**
l'élément de couplage (26) comporte un élément de rappel de couplage (42) pour rappeler cet élément de couplage (26) de sa position de couplage.

8. Dispositif de coupe (2) selon l'une des revendications précédentes, **caractérisé en ce que**
l'élément de rappel de fonctionnement (10) est relié à la seconde branche (44) de l'élément de réglage (22) orienté en direction de l'élément de coupe (6) à partir d'un axe de basculement de réglage (36).

9. Dispositif de coupe (2) selon l'une des revendications précédentes, **caractérisé en ce que**
le dispositif de réglage (I) est conçu de façon que l'élément de coupe (6) soit en position de fonctionnement et lorsque la plage de contact de commutation (32), est contre l'arbre de commutation (28), il soit en position de repos.

10. Dispositif de coupe (2) selon l'une des revendications précédentes, **caractérisé par**
un dispositif d'entraînement pour une rotation continue de l'arbre de commutation (28) au-delà de 360°.

11. Dispositif de coupe (2) selon la revendication 10,
**caractérisé par**
un dispositif de blocage est réalisé pour bloquer le dispositif d'entraînement lorsque la zone de contact de commutation (32) est appliquée contre l'arbre de commutation (28), notamment si l'élément de couplage (26) n'est pas en position de couplage.

12. Dispositif de coupe (2) selon la revendication 10 ou 11,
**caractérisé en ce que**
l'extension radiale d'un élément de commutation (38) à partir de l'axe d'arbre de commutation (58) est égal à au moins 1, 3 fois, notamment 1,5 fois la taille de l'extension radiale d'un segment (50) au moins pratiquement de forme cylindrique de l'arbre de commutation (28) de l'axe d'arbre de commutation (58).

13. Dispositif de coupe (2) selon l'une des revendications précédentes, **caractérisé en ce que**
entre deux éléments de commutation (38) écartés l'un de l'autre dans la direction de l'axe de l'arbre de commutation (58), l'arbre de commutation (28) comporte au moins un élément de transfert (52) dont l'extension radiale par rapport à l'axe de l'arbre de commutation (58) est supérieure à l'extension radiale des éléments de commutation (38) par rapport à l'axe de l'arbre commutation (58).

14. Dispositif de coupe (2) selon l'une des revendications précédentes, **caractérisé en ce que**
il est prévu au moins un élément de nettoyage couplé à l'arbre de commutation (28) et tournant en fonction de sa rotation, et dont l'axe de rotation est parallèle à l'axe de l'arbre de commutation (58).

15. Machine à usage agricole, notamment presse à balle (30) ou chariot de transport comportant un dispositif de coupe (2) selon l'une des revendications précédentes.
